# EUROPÄISCHE PATENTANMELDUNG

(11) **EP 4 248 807 A1**
(43) Veröffentlichungstag der Anmeldung: **27.09.2023**
(21) Anmeldenummer: 22163276.3
(22) Anmeldetag: 21.03.2022
(51) Int. Cl.: A47J 27/00, A47J 45/06

(54) **KOCHVORRICHTUNG UMFASSEND EINEN KÖRPERSENSORKANAL SOWIE VERFAHREN ZUR HERSTELLUNG EINER KOCHVORRICHTUNG MIT EINEM KÖRPERSENSORKANAL**

(71) Anmelder: Prodlog GmbH, 8360 Eschlikon (CH)
(72) Erfinder: Weber, Stephan, 8360 Eschlikon (CH); Weber, Mario, 8500 Frauenfeld (CH)
(74) Vertreter: Hepp Wenger Ryffel AG

(57) **Zusammenfassung**

Die Erfindung betrifft eine Kochvorrichtung (1), insbesondere eine Bratpfanne, welche einen Körper (18) umfasst. Der Körper (18) umfasst einen mehrschichtigen Boden (2) und eine mehrschichtige Seitenwand (3), wobei die Seitenwand (3) durch einen Übergangsbereich mit dem Boden (2) verbunden ist und wobei die Seitenwand (3) eine Verbindungsanordnung (9) zum Verbinden mit einem Griffelement (8) umfasst. Ausserdem umfasst der Körper (2) einen Körpersensorkanal (4). Der Boden (2) weist einen Mittenbereich um einen Mittelpunkt auf. Der Körpersensorkanal (4) verläuft innerhalb des Bodens (2) und der Seitenwand (3) von der Verbindungsanordnung (9) zu dem Boden (2), bevorzugt im Wesentlichen zu dem Mittenbereich. Der Radius im Übergangsbereich beträgt mindestens 19mm.

Die Erfindung betrifft ausserdem ein Verfahren zur Herstellung einer Kochvorrichtung (1).

## Beschreibung

Die vorliegende Erfindung betrifft eine Kochvorrichtung umfassend einen Körpersensorkanal sowie ein Verfahren zur Herstellung einer Kochvorrichtung mit einem Sensorkanal.

Kochvorrichtungen sind Vorrichtungen für die Zubereitung von Lebensmitteln auf einer Hitzequelle wie einem Herd oder einem Feuer. Um den Garprozess der Lebensmittel steuern und kontrollieren zu können, weisen Kochvorrichtungen vorteilhaft einen Temperatursensor auf, welcher in dem Boden der Kochvorrichtungen verbaut ist.

Kochvorrichtungen mit einem Sensorkanal sind bekannt. Die WO 2019/193044 A1 offenbart ein Verfahren zum Herstellen und Bearbeiten einer aus Plattenkörpern aufgebauten Platte, die mit mindestens einem eingebetteten Temperatursensor versehen oder nachrüstbar ist. Dabei wird ein Sensorkanal zwischen mehreren Plattenkörpern angeordnet und die aus mehreren Plattenkörpern zusammengesetzte Platte wird anschliessend weiterverarbeitet.

Die WO 2017/137833 A1 offenbart eine Kochvorrichtung mit einem Sensorkanal, der in einer Seitenwand und im Boden der Kochvorrichtung angeordnet ist.

Die aus dem Stand der Technik bekannten Kochvorrichtungen mit einem Sensorkanal weisen zwischen dem Boden und der Seitenwand einen engen Radius auf. Ein solcher Radius macht es unmöglich, den Körper der Kochvorrichtung durch Verformen oder Tiefziehen aus einem Stück zu fertigen, ohne dass der Sensorkanal dabei knickt. Durch einen geknickten Sensorkanal ist kein Sensor einführbar. Eine Vorrichtung mit einem geknickten Sensorkanal ist somit technisch unbrauchbar für die Anordnung eines Sensors. Die nach dem Stand der Technik bekannten Kochvorrichtungen mit einem Sensorkanal sind somit nicht aus einem Plattenkörper fertigbar. Es ist daher die Aufgabe der Erfindung, die Nachteile des Standes der Technik zu überwinden und insbesondere eine Kochvorrichtung sowie ein Verfahren zur Herstellung einer Kochvorrichtung zu schaffen, welches einfach und sicher ausführbar ist und wobei der Sensorkanal ungeknickt erhalten bleibt, so dass ein Sensor in den Sensorkanal einführbar ist und wobei der Körper der Vorrichtung aus einem Plattenkörper herstellbar ist.

Die Aufgabe wird durch eine Kochvorrichtung mit einem Körpersensorkanal sowie ein Verfahren zur Herstellung einer Kochvorrichtung mit einem Körpersensorkanal gemäss den unabhängigen Patentansprüchen gelöst.

Insbesondere wird die Aufgabe durch eine Kochvorrichtung, insbesondere eine Bratpfanne, gelöst, welche einen Körper umfasst. Der Körper umfasst einen mehrschichtigen Boden und eine mehrschichtige Seitenwand. Die Seitenwand ist durch einen Übergangsbereich mit dem Boden verbunden. Die Seitenwand umfasst eine Verbindungsanordnung zum Verbinden mit einem Griffelement. Der Boden des Körpers weist einen Mittenbereich um einen Mittelpunkt auf. Der Körper umfasst einen Körpersensorkanal, welcher innerhalb des Bodens und der Seitenwand von der Verbindungsanordnung zu dem Boden verläuft. Der Körpersensorkanal kann innerhalb des Bodens und der Seitenwand von der Verbindungsanordnung im Wesentlichen zu dem Mittenbereich, verlaufen. Der Radius im Übergangsbereich beträgt mindestens 19 mm.

Eine solche Kochvorrichtung ist vorteilhaft einsetzbar und herstellbar. Durch den grossen Radius im Übergangsbereich kann der Körper aus einem Werkstück durch Verformen, beispielsweise Tiefziehen, hergestellt werden und ist somit bevorzugt aus einem Stück hergestellt. Dadurch ist es nicht notwendig, dass der Körper aus mehreren Bauteilen zusammengesetzt wird. Es ist nicht nötig, dass mehrere Werkstücke, wie beispielsweise ein Bodenteil und eine Seitenwand zusammengefügt werden müssen. Somit kann bei der Herstellung der Kochvorrichtung mindestens ein Fertigungsschritt eingespart werden, bei dem die einzelnen Werkstücke präzise ausgerichtet und dann beispielsweise durch Schweissen verbunden werden müssten. Die Fertigung des Körpers der Kochvorrichtung aus einem Werkstück ist ressourcenschonend und damit günstig. Ausserdem sind Teile, welche mit Verbindungsmitteln, wie Nieten, Schrauben oder einer Schweissnaht verbunden sind anfällig für mechanische Einwirkungen. Ein Körper, welcher aus einem Werkstück hergestellt ist, ist somit besonders robust und unempfindlich gegen mechanische Einflüsse.

Unter Griffelement wird im Rahmen der Erfindung jegliche Art von Stiel oder Griff verstanden.

Der Körper, der Boden und die Seitenwand können jeweils aus zwei Schichten oder drei Schichten oder mehr Schichten hergestellt sein. Die Schichten können unterschiedliche Materialien aufweisen. Die Schichten können aus Aluminium, oder Eisen, oder einer Legierung die Eisen enthält, gefertigt sein. Die Schichten können auch aus einem anderen Material gefertigt sein. Es ist möglich, dass der Boden und die Seitenwand eine Antihaft-Beschichtung aufweisen, beispielsweise Teflon. Der Körpersensorkanal kann im Querschnitt eine kreisförmige Grundfläche aufweisen. Der Körpersensorkanal kann auch eine rechteckige oder eine quadratische Grundfläche aufweisen. Der Körpersensorkanal kann eine ovale oder eine anders geformte Grundfläche aufweisen. Der Boden kann im Wesentlichen kreisförmig ausgebildet sein. Der Boden kann auch oval oder in einer anderen Form ausgebildet sein.

Der Boden der Kochvorrichtung und die Seitenwand der Kochvorrichtung können mindestens eine Aussenschicht aufweisen, die Eisen oder eine Eisenlegierung aufweist.

Durch diese Materialien ist die Pfanne auf einem Induktionskochfeld einsetzbar. Dadurch wird ein sehr schneller und effizienter Brat- und Garvorgang ermöglicht.

Die Aussenschicht des Bodens und der Seitenwand können beispielsweise Edelstahl aufweisen. Die Seitenwand und der Boden können auch Eisen aufweisen. Es ist möglich, dass die Kochvorrichtung eine Innenschicht aufweist, welche aus demselben Material gefertigt ist wie die Aussenschicht. Es ist möglich, dass die Innenschicht der Kochvorrichtung aus einem anderen Material gefertigt ist als die Aussenschicht. Die Mittelschicht, welche zwischen der Aussenschicht und der Innenschicht angeordnet ist, kann aus Aluminium und/oder Kupfer und/oder aus einem anderen Material gefertigt sein.

Die Verbindungsanordnung der Kochvorrichtung kann eine Sensoröffnung aufweisen, die das Ende des Köpersensorkanals bildet.

Durch eine solche Sensoröffnung ist ein Sensor vorteilhaft in den Körpersensorkanal einführbar. Durch die Krümmung mit einem Mindestradius ist die Reibung, die bei dem Einführen des Sensors in den Körpersensorkanal entsteht, minimiert. Dadurch ergibt sich ein unkomplizierter und einfacher Einführvorgang.

Die Sensoröffnung kann kreisförmig ausgebildet sein. Die Sensoröffnung kann auch rechteckig oder quadratisch oder oval ausgebildet sein. Entscheidend ist, dass ein Sensor in die Sensoröffnung einführbar ist.

Die Sensoröffnung kann mindestens 3 cm von einer Unterkante des Bodens beabstandet sein. Die Sensoröffnung der Kochvorrichtung kann auch mindestens 5 cm von einer Unterkante des Bodens beabstandet sein. Bevorzugt ist die Sensoröffnung mindestens 1,5 cm von einer Oberkante des Seitenwand beabstandet.

Durch die Beabstandung der Sensoröffnung von einer Unterkante des Bodens ist ein Griffelement vorteilhaft im Bereich der Sensoröffnung anbringbar. Durch den Abstand, welchen die Sensoröffnung und damit auch das Griffelement von einer Unterkante des Bodens aufweist, wird die Verbindung zwischen dem Körper und dem Griffelement weniger hohen Temperaturen und weniger starken Temperaturschwankungen ausgesetzt. Dadurch ist die Verbindung zwischen dem Körper und dem Griffelement wenig beansprucht und äusserst robust und langlebig.

Die Verbindungsanordnung der Kochvorrichtung kann mindestens eine Zentriervorrichtung umfassen. Durch die Zentriervorrichtung kann ein Griffelement passgenau mit der Seitenwand über die Verbindungsanordnung verbindbar sein. Die Zentriervorrichtung kann konisch und/oder trichterförmig ausgebildet sein.

Durch eine solche Zentriervorrichtung ist das Griffelement schnell und akkurat an dem Körper zentrierbar. Ein Arbeiter oder eine Maschine kann die Teile schnell und präzise zusammensetzen. Dadurch ergibt sich ein effizienter, genauer und reproduzierbarer Produktionsprozess und eine hohe Produktqualität.

Die Zentriervorrichtung kann beispielsweise Stifte oder Bolzen umfassen. Es ist denkbar, dass die Zentriervorrichtung aus ein, zwei, drei, vier oder mehr Stiften oder Bolzen besteht. Die Zentriervorrichtung kann auch konisch oder trichterförmig ausgebildet sein und das Griffelement kann Stifte oder Bolzen umfassen. Dann umfasst das Griffelement Stifte oder Bolzen und es ist mindestens ein Stift oder ein Bolzen des Griffelements in die Zentriervorrichtung einführbar. Entscheidend ist, dass die Zentriervorrichtung komplementär zu dem Griffelement ausgebildet ist. Die Zentriervorrichtung kann aus demselben Material wie eine der Pfannenschichten gefertigt sein. Die Zentriervorrichtung kann auch aus einem anderen Material gefertigt sein. Bevorzugt ist die Zentriervorrichtung aus einem hitzeresistenten und korrosionsbeständigen Material wie beispielsweise Edelstahl gefertigt.

Die Kochvorrichtung kann ein Griffelement mit einer Befestigungsvorrichtung umfassen. Durch die Befestigungsvorrichtung kann das Griffelement an der Verbindungsanordnung befestigbar sein.

Durch eine solche Befestigungsvorrichtung ist das Griffelement schnell und akkurat an der Verbindungsanordnung befestigbar.

Die Befestigungsvorrichtung kann komplementär zu der Verbindungsanordnung ausgebildet sein. Komplementär meint, dass das Griffelement mit der Befestigungsvorrichtung durch die Zentriervorrichtung an der Verbindunganordnung zentrierbar ist und anschliessend mit der Verbindungsanordnung stabil verbunden werden kann, so dass die Verbindung im verbundenen Zustand hohe Kräfte und Drehmomente aufnehmen kann.

Die Befestigungsvorrichtung kann einen Stift umfassen, der in die konische oder zylinderförmige Befestigungsvorrichtung einführbar ist. Es ist auch möglich, dass die Verbindungsanordnung Stifte oder Bolzen umfasst, und die Befestigungsvorrichtung Ausnehmungen umfasst, die zylinderförmig, kegelförmig oder konisch geformt sein können. Entscheidend ist, dass die Befestigungsvorrichtung komplementär zu der Verbindungsanordnung ausgebildet ist. Die Befestigungsvorrichtung kann aus einem Metall, einem Stahl oder einer Eisenlegierung gefertigt sein. Die Befestigungsvorrichtung kann aus demselben Material wie die Verbindungsanordnung oder eine Schicht des Körpers gefertigt sein. Die Befestigungsvorrichtung kann aus einem anderen Material gefertigt sein. Bevorzugt ist die Befestigungsvorrichtung aus einem hitzebeständigen und korrosionsbeständigen Material gefertigt.

Das Griffelement der Kochvorrichtung kann einen Griffelementsensorkanal mit einer Griffelementsensorkanalöffnung aufweisen. Im befestigten Zustand des Griffelements ist die Griffelementsensorkanalöffnung passgenau an der Körpersensorkanalöffnung angeordnet. Der Körpersensorkanal und der Griffelementsensorkanal bilden dann einen Sensorkanal.

Durch einen Griffelementsensorkanal ist ein Sensor vorteilhaft durch den Griffelementsensorkanal in den Körpersensorkanal einführbar. In dem Fertigungsprozess kann der filigrane Sensor somit erst in den Sensorkanal eingeführt werden, wenn das Griffelement schon mit dem Körper verbunden ist. Fertigungsschritte, bei denen viel Hitze oder eine hohe mechanische Einwirkung auftritt, beispielsweise bei der Verformung des Körpers oder bei der Verbindung des Griffelements mit dem Körper durch Schweissen, können somit durchgeführt werden, ohne dass sich der Sensor dabei in dem Sensorkanal befindet. Dadurch wird gewährleistet, dass der filigrane Sensor während des Fertigungsprozesses nicht beschädigt wird. So ergibt sich ein hohes Mass an Produktqualität.

Der Griffelementsensorkanal kann im Querschnitt eine kreisförmige Grundfläche aufweisen. Der Griffelementsensorkanal kann im Querschnitt auch eine ovale, eine quadratische oder eine rechteckige Grundfläche aufweisen. Entscheidend ist, dass ein Sensor durch den Griffelementsensorkanal führbar ist. Die Griffelementsensorkanalöffnung kann im Querschnitt so geformt sein wie die Körpersensorkanalöffnung. Die Griffelementsensorkanalöffnung kann im Querschnitt auch kleiner oder grösser ausgebildet sein als die Körpersensorkanalöffnung. Bevorzugt ist die Griffelementsensorkanalöffnung kleiner ausgebildet als die Körpersensorkanalöffnung, sodass ein Sensor vorteilhaft durch die Griffelementsensorkanalöffnung in die Körpersensorkanalöffnung einführbar ist. Die Griffelementsensorkanalöffnung kann dieselbe oder eine andere Form aufweisen wie die Körpersensorkanalöffnung.

Die Kochvorrichtung kann eine Sensorvorrichtung aufweisen. Die Sensorvorrichtung kann einen Sensor, einen elektrischen Leiter sowie eine Anzeigeeinrichtung und/oder Kommunikationseinrichtung aufweisen. Der Sensor kann ein Temperatursensor sein. Der Sensor kann im Körpersensorkanal angeordnet sein. Der Sensor kann im Körpersensorkanal im Wesentlichen im Mittenbereich des Bodens angeordnet sein. Der elektrische Leiter kann im Sensorkanal angeordnet sein. Die Anzeigeeinrichtung und/oder Kommunikationseinrichtung kann im Griffelement und/oder am Griffelement angeordnet sein. Der Sensor kann durch den elektrischen Leiter mit der Anzeigeeinrichtung und/oder der Kommunikationseinrichtung verbunden sein.

Der elektrische Leiter kann zumindest teilweise als Spiralfeder geformt sein, insbesondere in einem Bereich angrenzend an die Anzeigeeinrichtung und/oder Kommunikationseinrichtung.

Ein derartig geformter elektrischer Leiter kann Zugbelastungen auf den Leiter kompensieren, ohne aus dem Sensorkanal herausgezogen zu werden.

Durch einen solchen Sensor ist die Temperatur im Mittenbereich des Bodens vorteilhaft messbar und Lebensmittel können äusserst präzise gegart und/oder gebraten werden.

Die Anzeigeeinrichtung kann einen oder mehrere Messwerte des Sensors anzeigen. Die Anzeigeeinrichtung kann beispielsweise die Temperatur anzeigen. Die Anzeigeeinrichtung und/oder Kommunikationseinrichtung kann im Griffelement oder am Griffelement angeordnet sein. Die Anzeigeeinrichtung und/oder Kommunikationseinrichtung kann in das Griffelement eingeschraubt oder in das Griffelement eingeklebt oder an das Griffelement angeklebt sein. Auch eine andere Befestigung der Anzeigeeinrichtung und/oder Kommunikationseinrichtung ist denkbar. Der Sensor und/oder der elektrische Leiter können so geformt bzw. vorgespannt ausgebildet sein, dass der Sensor im eingebauten Zustand die Oberseite des Sensorkanals im Mittenbereich berührt. Der Sensor und/oder der elektrische Leiter können auch so geformt bzw. vorgespannt ausgebildet sein, dass der Sensor im eingebauten Zustand die Unterseite des Sensorkanals im Mittenbereich berührt. Auch eine Position des Sensors im Sensorkanal im Mittenbereich, bei dem der Sensor die Sensorwand nicht berührt, ist denkbar.

Die Anzeigeeinrichtung und/oder Kommunikationseinrichtung kann eine Schnittstelle umfassen. Mit der Schnittstelle kann die Anzeigeeinrichtung und/oder Kommunikationseinrichtung mit einem Smartphone und/oder Computer verbindbar sein. Die Schnittstelle kann ein Bluetooth-Modul und/oder WLAN-Modul umfassen.

Mit einer solchen Schnittstelle ist die Anzeigeeinrichtung und/oder Kommunikationseinrichtung vorteilhaft mit einem mobilen Endgerät oder einem geeigneten Herd oder Backofen verbindbar. Durch die Kopplung der Anzeigeeinrichtung und/oder Kommunikationseinrichtung kann ein Messwert des Sensors, beispielsweise die Temperatur, auf einem mobilen Endgerät angezeigt werden. Es ist auch möglich, dass die Anzeigeeinrichtung und/oder Kommunikationseinrichtung sowohl den Messwert anzeigt als auch den Messwert an ein mobiles Endgerät kommuniziert. Dann kann ein Benutzer der Kochvorrichtung den Brat- bzw. Garvorgang sowohl direkt an der Kochstelle durch Betrachten der Anzeige kontrollieren und steuern als auch in einer Entfernung von der Kochstelle durch Betrachten der Anzeige des mobilen Endgerätes, mit dem die Anzeigeeinrichtung und/oder Kommunikationseinrichtung verbunden ist.

Die Kochvorrichtung kann eine Energiespeichervorrichtung umfassen. Die Energiespeichervorrichtung kann beispielsweise einen Akkumulator oder eine Batterie sein.

Durch eine solche Energiespeichervorrichtung ist die Kochvorrichtung flexibel betreibbar. Es ist nicht erforderlich, dass die Kochvorrichtung während der Benutzung mit einem Kabel an den elektrischen Strom angeschlossen ist. Ein Kabel würde möglicherweise andere Arbeitsvorgänge, welche im Schatten des Brat- und Garvorgangs an der Kochstelle stattfinden, behindern. Ausserdem könnte ein Kabel durch eine Hitzequelle, beispielsweise eine Herdplatte, erhitzt werden und schmelzen oder gar entzündet werden. Durch die Energiespeichervorrichtung ergibt sich somit eine kabellose Benutzung der Kochvorrichtung, welche äusserst sicher und benutzerfreundlich ist.

Es ist möglich, dass die Energiespeichervorrichtung handelsübliche Akkumulatoren oder Batterien aufnimmt. Es kann auch ein Ackumulator in die Kochvorrichtung integriert sein, welcher durch ein Kabel oder kabellos insbesondere induktiv aufladbar ist. Das Kabel kann dann an die Kochvorrichtung angeschlossen werden, wenn diese nicht in Benutzung ist. Es ist auch möglich, dass die Energiespeichervorrichtung handelsübliche Akkumulatoren aufnimmt und eine Anschlussvorrichtung aufweist. Dann können die handelsüblichen Akkumulatoren durch Anschliessen des Kabels mit der Anschlussvorrichten und Verbinden mit dem elektrischen Strom geladen werden.

Die Aufgabe wird ausserdem durch ein Verfahren zur Herstellung einer Kochvorrichtung, insbesondere zur Herstellung einer Kochvorrichtung wie oben beschrieben, gelöst. Das Verfahren umfasst die folgenden Schritte:
- Anordnen eines mehrschichtigen Plattenkörpers umfassend einen Körpersensorkanal in einer Verformungseinrichtung;
- Verformen, insbesondere Tiefziehen, des Plattenkörpers mittels der Verformungseinrichtung;
- Entnehmen des Körpers der Kochvorrichtung.

Das Verformen des Plattenkörpers dauert mindestens 5 s. Das Verformen des Plattenkörpers kann auch mindestens 14 s oder mindestens 16 s dauern, abhängig von der Höhe der Seitenwand. Das Verformen des Plattenkörpers kann auch im Wesentlichen mindestens 1 s pro 1 cm Höhe dauern, wobei die Höhe die Entfernung zwischen einer Unterkante eines Bodens des verformten Plattenkörpers und einer Oberkante einer Seitenwand des verformten Plattenkörpers ist.

Ein solches Verfahren ist einfach und sicher durchführbar. Durch die Dauer des Verformungsvorgangs wird gewährleistet, dass der Körpersensorkanal während des Verformungsvorgangs nicht knickt. Vielmehr behält der Körpersensorkanal während des Verformungsvorgangs auf der gesamten Länge im Wesentlichen seinen Querschnitt bei.

Der mehrschichtige Plattenkörper kann vor dem Verformungsvorgang quaderförmig geformt sein. Der mehrschichtige Plattenkörper kann vor dem Verformungsvorgang auch zylinderförmig geformt sein. Bevorzugt weist der mehrschichtige Plattenkörper vor dem Verformungsvorgang im Wesentlichen eine kreiszylindrische Form auf, wobei die Höhe des Kreiszylinders deutlich geringer ist als der Radius des Kreiszylinders. Das Verformen bzw. Tiefziehen kann beispielsweise mittels eines Stempels erfolgen. Es ist möglich, dass sich der Stempel während des Verformungsvorgangs gleichmässig linear bewegt. Es ist möglich, dass sich der Stempel während des Verformungsvorgangs in einer Phase des Verformungsvorgangs schneller bewegt als in einer anderen Phase des Verformungsvorgangs. Es ist möglich, dass sich der Stempel während der ersten 15 mm des Verformungsvorgangs langsamer bewegt als während des restlichen Verformungsvorgangs.

Es ist möglich, dass der mehrschichte Plattenkörper während des Verformungsvorgangs mit einem Gleitmittel ausgestattet ist, beispielsweise mit Ziehöl. Es ist möglich, dass der Plattenkörper bei dem Verformungsvorgang im Wesentlichen Raumtemperatur aufweist. Es ist auch möglich, dass der Plattenkörper bei dem Verformungsvorgang einer Temperatur von über 50°C, über 100°C aufweist.

Das Verfahren kann die folgenden weiteren Verfahrensschritte umfassen:
- Ausbilden einer Verbindungsanordnung mit einer Zentriervorrichtung und einer Sensoröffnung an der Seitenwand des Körpers; und
- Anordnen eines Griffelements mit einer Befestigungsvorrichtung und einer Griffelementsensoröffnung an der Zentriervorrichtung des Körpers, wobei das Griffelement mit der Befestigungsvorrichtung so an der Zentriervorrichtung angebracht und zentriert wird, dass die Griffelementsensoröffnung passgenau an der Sensoröffnung angeordnet ist;

- Verbinden der Befestigungsvorrichtung mit der Verbindungsanordnung, wobei die Befestigungsvorrichtung bevorzugt durch Schweissen, Nieten, Pressschweissen, Kleben und/oder Schrauben mit der Verbindungsanordnung verbunden wird;
- Einführen einer Sensoreinheit umfassend einen Sensor, einen elektrischen Leiter sowie eine Kommunikationseinrichtung, in den Sensorkanal, wobei der Sensor und der elektrische Leiter zumindest teilweise zunächst in den Griffelementsensorkanal und anschliessend in den Körpersensorkanal eingeführt werden und bevorzugt der Körpersensorkanal und/oder der Griffelementsensorkanal vorgängig mit einem Gleitmittel, insbesondere Silikonspray oder Silikonöl, beaufschlagt werden;
- Anordnen der Kommunikationseinrichtung im Griffelement und/oder am Griffelement.

Durch ein solches Verfahren ist die Kochvorrichtung einfach und effizient herstellbar. Durch das Anordnen des Griffelements mit einer Befestigungsvorrichtung und einer Griffelementsensoröffnung an der Zentriervorrichtung des Körpers wird gewährleistet, dass die Griffelementsensoröffnung und die Sensoröffnung passgenau angeordnet sind. Das Verfahren ist dadurch unkompliziert und reproduzierbar. Durch die Beaufschlagung des Körpersensorkanals und/oder des Griffelementsensorkanals wird die Reibung, welche bei dem Einführen der Sensorvorrichtung zwischen der Sensorvorrichtung und dem Körpersensorkanal und/oder dem Griffelementsensorkanal entsteht, minimiert. Da die Sensoreinheit erst nach den Verfahrensschritten eingebracht wird, welche eine hohe mechanische und/oder thermische Belastung bedeuten (Schweissen, Verformen, Nieten), ist es äusserst unwahrscheinlich, dass die filigrane Sensoreinheit während des Verfahrens beschädigt wird.

Die Sensoröffnung wird bevorzugt durch die äusserste Schicht der Seitenwand gefräst, erodiert, gebohrt oder mit analogen Verfahren eröffnet.

Der Griffelementsensorkanal kann nachträglich gebohrt werden oder während der Griffherstellung bereits durch Einlegen eines Rohrelements vorgesehen werden.

Es ist möglich, dass das Gleitmittel in den Körpersensorkanal eingesprüht wird. Es ist möglich, dass das Gleitmittel in den Griffelementsensorkanal eingesprüht wird. Es ist möglich, dass das Gleitmittel auf die Sensorvorrichtung gesprüht wird, oder dass die Sensorvorrichtung in das Gleitmittel eingetunkt wird. Auch eine Kombination der vorher genannten Massnahmen ist möglich. Entscheidend ist, dass die Sensorvorrichtung einfach, präzise und mit möglichst wenig Reibung und Widerstand in den Sensorkanal einführbar ist.

Die Befestigungsvorrichtung kann durch mehrere der Verbindungsarten Schweissen, Nieten, Pressschweissen, Kleben und/oder Schrauben mit der Verbindungsanordnung verbunden sein. Auch andere Befestigungsarten sind denkbar. Die Kommunikationseinrichtung kann in das Griffelement eingesteckt werden. Die Kommunikationseinrichtung kann auch in das Griffelement eingeschraubt werden. Es möglich, dass das Griffelement ein Innengewinde umfasst und die Kommunikationseinrichtung ein Aussengewinde umfasst und die Kommunikationseinrichtung dann in das Griffelement eingeschraubt wird. Es ist auch möglich, dass die Kommunikationseinrichtung komplementär zum Ende des Griffelements ausgebildet ist und die Kommunikationseinrichtung in dem Griffelement eingeklebt wird. Auch andere Befestigungsarten mit der die Kommunikationseinrichtung im Griffelement oder am Griffelement angebracht wird, sind denkbar.

Die Erfindung wird in den folgenden Figuren näher erläutert. Hierbei zeigt:
- Figur 1:: Eine Kochvorrichtung mit einem Körpersensorkanal;
- Figur 2:: Eine Kochvorrichtung mit einem Körpersensorkanal und einer Sensoröffnung;
- Figur 3:: Eine Kochvorrichtung mit einem Körpersensorkanal und einem Griffelement;
- Figur 4:: Eine Kochvorrichtung mit einem Griffelement und einem Sensorkanal;
- Figur 5:: Eine Kochvorrichtung mit einem Griffelement und einer Anzeigeeinrichtung;
- Figur 6:: Eine Kochvorrichtung mit einem Griffelement und einer Energiespeichereinrichtung.

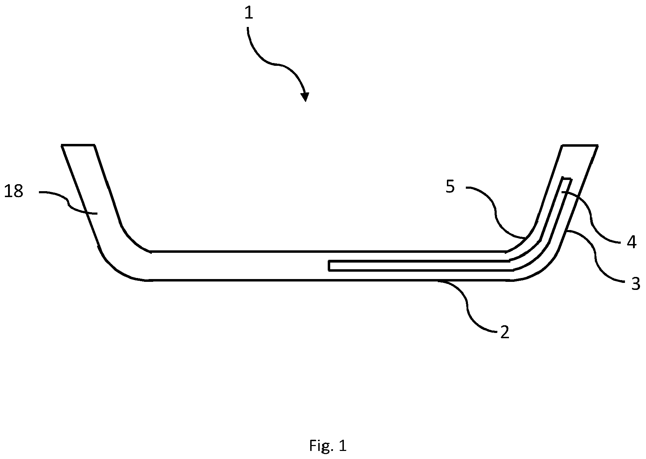

Figur 1 zeigt eine Kochvorrichtung 1 mit einem Körpersensorkanal 4. Der Körper 18 weist einen Boden 2 sowie eine Seitenwand 3 auf. Der Boden 2 ist mit der Seitenwand 3 durch einen Übergangsbereich 5 verbunden. Der Übergangsbereich 5 ist gekrümmt ausgebildet. Der Körpersensorkanal 4 reicht von dem Mittenbereich des Bodens 2 bis in die Seitenwand 3.

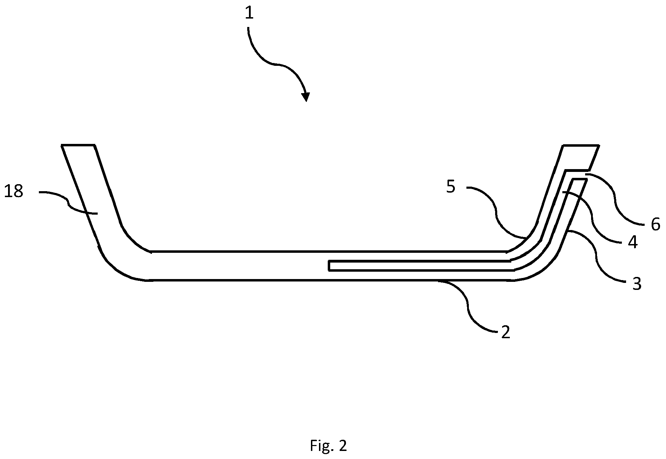

Figur 2 zeigt eine Kochvorrichtung 1. Der Körper 18 weist einen Körpersensorkanal 4 und eine Sensoröffnung 6 auf. Die Sensoröffnung 6 ist an der Seitenwand 3 des Körpers 18 ausgebildet. Die Sensoröffnung 6 führt in den Körpersensorkanal 4. Gleiche Bezugszeichen bezeichnen die gleichen Komponenten.

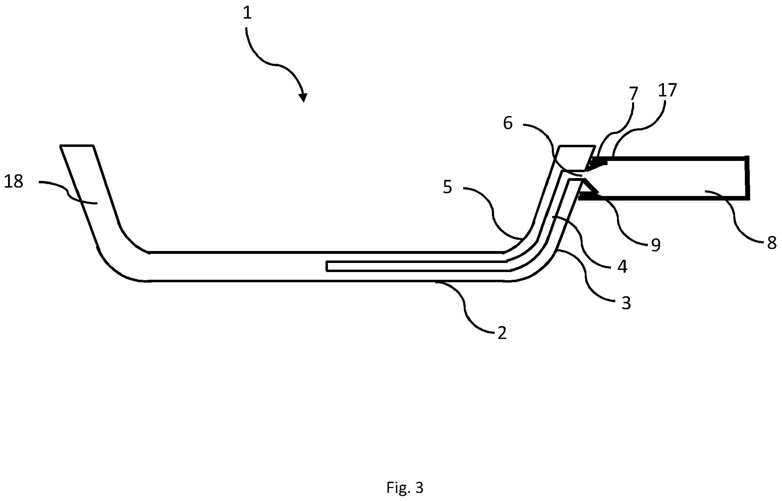

Figur 3 zeigt eine Kochvorrichtung 1 mit einem Körper 18 und einem Griffelement 8. Die Kochvorrichtung 1 umfasst eine Zentriervorrichtung 7 sowie eine Verbindungsanordnung 9. Das Griffelement 8 ist auf die Verbindungsanordnung 9 aufgesteckt und mit der Befestigungsvorrichtung 17 an dem Griffelement 8 befestigt. Die Zentriervorrichtung 7 ist als Trichter ausgebildet. Durch die trichterförmige Zentriervorrichtung 7 ist ein Sensor und/oder elektrische Leiter durch die Sensoröffnung 6 in den Körpersensorkanal 4 einführbar. Gleiche Bezugszeichen bezeichnen die gleichen Komponenten.

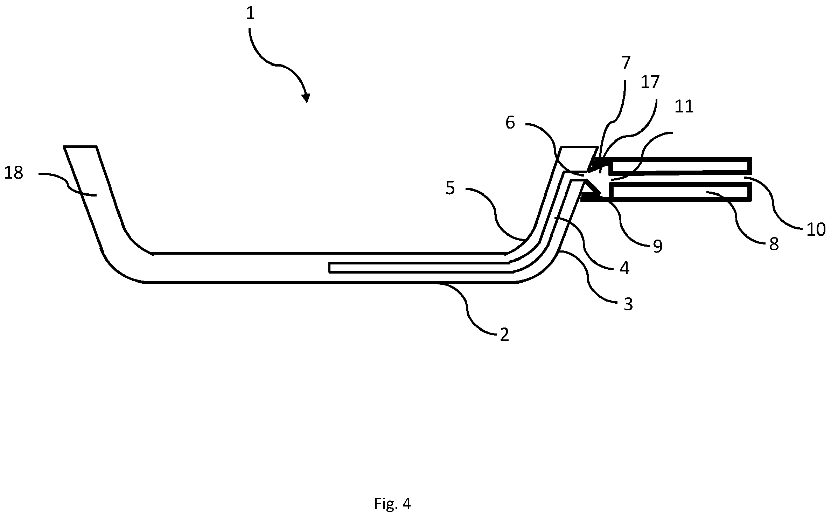

Figur 4 zeigt eine Kochvorrichtung 1 mit einem Körpersensorkanal 4, einem Griffelement 8 und einem Griffelementsensorkanal 10. Der Körpersensorkanal 4 ist im Körper 18 ausgebildet. Der Griffelementsensorkanal 10 ist in dem Griffelement 8 ausgebildet. Der Griffelement 8 ist auf die Verbindungsanordnung 9 aufgesteckt und mit der Befestigungsvorrichtung 17 an dem Griffelement 8 befestigt. Die Zentriervorrichtung 7 ist so ausgebildet, dass das Griffelement 8 auf der Zentriervorrichtung 7 zentrierbar ist und eine Sensorvorrichtung 12 durch den Griffelementsensorkanal 10, die Griffelementsensorkanalöffnung 11, die Zentriervorrichtung 7 und die Sensoröffnung 6 in den Körpersensorkanal 4 einführbar ist. Gleiche Bezugszeichen bezeichnen die gleichen Komponenten.

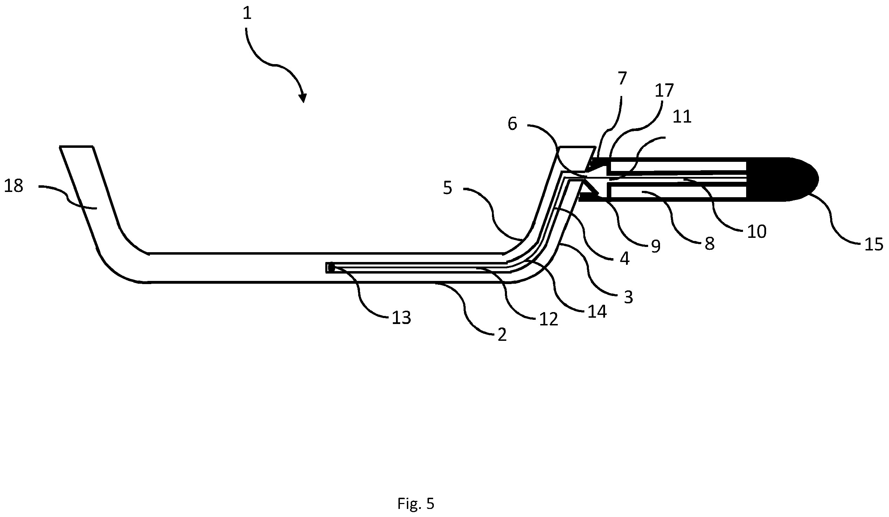

Figur 5 zeigt eine Kochvorrichtung 1 mit einer Sensorvorrichtung 12, einem Griffelement 8 und einer Anzeigeeinrichtung 15. Die Anzeigeeinrichtung 15 ist an dem Griffelement 8 angeordnet. Die Sensorvorrichtung 12 umfasst einen Sensor 13, einen elektrischen Leiter 14 und eine Anzeigeeinrichtung 15. Der Sensor 13 ist im Mittenbereich des Bodens 2 der Kochvorrichtung 1 angeordnet. Der elektrische Leiter 14 verläuft durch den Körpersensorkanal 4, die Sensoröffnung 6, die Zentriervorrichtung 7, die Griffelementsensorkanalöffnung 11 und den Griffelementsensorkanal 10 zu der Anzeigeeinrichtung 15. Gleiche Bezugszeichen bezeichnen die gleichen Komponenten.

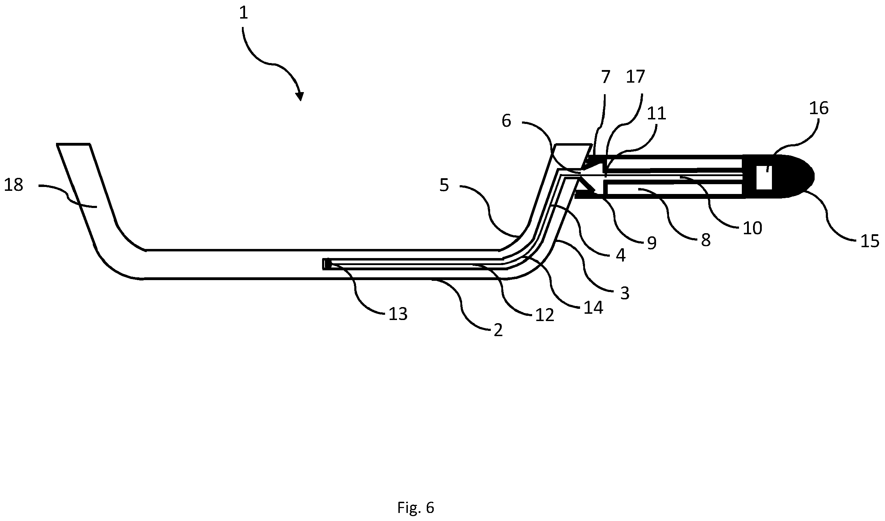

Figur 6 zeigt eine Kochvorrichtung 1 mit einer Sensorvorrichtung 12, einer Anzeigeeinrichtung 15 sowie eine Energiespeichereinrichtung 16. Die Energiespeichereinrichtung 16 ist in die Anzeigeeinrichtung 15 integriert. Gleiche Bezugszeichen bezeichnen die gleichen Komponenten.

## Patentansprüche

1. Kochvorrichtung, insbesondere eine Bratpfanne, umfassend einen Körper, umfassend einen mehrschichtigen Boden und eine mehrschichtige Seitenwand, wobei die Seitenwand durch einen Übergangsbereich mit dem Boden verbunden ist und wobei die Seitenwand eine Verbindungsanordnung zum Verbinden mit einem Griffelement umfasst, und einen Körpersensorkanal, wobei der Boden einen Mittenbereich um einen Mittelpunkt aufweist, und der Körpersensorkanal innerhalb des Bodens und der Seitenwand von der Verbindungsanordnung zu dem Boden, bevorzugt im Wesentlichen zu dem Mittenbereich, verläuft, **dadurch gekennzeichnet, dass** der Radius im Übergangsbereich mindestens 19 mm beträgt.

2. Kochvorrichtung nach Anspruch 1, **dadurch gekennzeichnet, dass** der Boden und bevorzugt die Seitenwand mindestens eine Aussenschicht umfassend Eisen oder Eisenlegierung aufweist.

3. Kochvorrichtung nach einem der vorhergehenden Ansprüche, **dadurch gekennzeichnet, dass** die Verbindungsanordnung eine Sensoröffnung aufweist, die das Ende des Körpersensorkanals bildet.

4. Kochvorrichtung nach Anspruch 3, **dadurch gekennzeichnet, dass** die Sensoröffnung mindestens 3 cm, bevorzugt mindestens 5 cm, von einer Unterkante des Bodens beabstandet ist.

5. Kochvorrichtung nach einem der vorhergehenden Ansprüche, **dadurch gekennzeichnet, dass** die Verbindungsanordnung mindestens eine Zentriervorrichtung umfasst, durch die ein Griffelement passgenau mit der Seitenwand über die Verbindungsanordnung verbindbar ist, wobei die Zentriervorrichtung insbesondere konisch und/oder trichterförmig ausgebildet ist.

6. Kochvorrichtung nach einem der vorhergehenden Ansprüche, **dadurch gekennzeichnet, dass** die Kochvorrichtung ein Griffelement mit einer Befestigungsvorrichtung umfasst, durch die das Griffelement an der Verbindungsanordnung befestigbar ist.

7. Kochvorrichtung nach Anspruch 6, **dadurch gekennzeichnet, dass** das Griffelement einen Griffelementsensorkanal mit einer Griffelementsensorkanalöffnung aufweist, wobei im befestigten Zustand des Griffelements die Griffelementsensorkanalöffnung passgenau an der Körpersensorkanalöffnung angeordnet ist, so dass ein Sensorkanal aus Körpersensorkanal und Griffelementsensorkanal gebildet ist.

8. Kochvorrichtung nach Anspruch 7, **dadurch gekennzeichnet, dass** die Kochvorrichtung eine Sensorvorrichtung aufweist, welche einen Sensor, bevorzugt einen Temperatursensor, einen elektrischer Leiter sowie eine Anzeigeeinrichtung und/oder Kommunikationseinrichtung aufweist, wobei der Sensor im Körpersensorkanal, bevorzugt im Wesentlichen im Mittenbereich des Bodens, angeordnet ist, der elektrische Leiter im Sensorkanal und die Anzeigeeinrichtung und/oder Kommunikationseinrichtung im Griffelement und/oder am Griffelement angeordnet ist und der Sensor durch den elektrische Leiter mit der Anzeigeeinrichtung und/oder der Kommunikationseinrichtung verbunden ist.

9. Kochvorrichtung nach Anspruch 8, **dadurch gekennzeichnet, dass** die Anzeigeeinrichtung und/oder Kommunikationseinrichtung eine Schnittstelle umfasst, mit der die Anzeigeeinrichtung und/oder Kommunikationseinrichtung mit einem Smartphone und/oder Computer und/oder Herd und/oder Backofen verbindbar ist und die Schnittstelle insbesondere ein Bluetoothmodul und/oder WLAN-Modul umfasst.

10. Kochvorrichtung nach einem der vorhergehenden Ansprüche, **dadurch gekennzeichnet, dass** die Kochvorrichtung eine Energiespeichervorrichtung, insbesondere einen Akkumulator oder eine Batterie, umfasst.

11. Verfahren zur Herstellung einer Kochvorrichtung, insbesondere nach einem der Ansprüche 1 - 10, umfassend die folgenden Schritte:
- Anordnen eines mehrschichtigen Plattenkörpers umfassend einen Körpersensorkanal in einer Verformungseinrichtung;
- Verformen, insbesondere Tiefziehen, des Plattenkörpers mittels der Verformungseinrichtung;
- Entnehmen des Körpers der Kochvorrichtung,
**dadurch gekennzeichnet, dass** das Verformen des Plattenkörpers mindestens 5 s, bevorzugt mindestens 14 s, insbesondere bevorzugt mindestens 16 s dauert und/oder dass das Verformen des Plattenkörpers mindestens 1 s pro 1 cm Höhe beträgt, wobei die Höhe die Entfernung zwischen einer Unterkante eines Bodens des verformten Plattenkörpers und einer Oberkante einer Seitenwand des verformten Plattenkörpers ist.

12. Verfahren nach Anspruch 11, umfassend die weiteren Verfahrensschritte:
- Ausbilden einer Verbindungsanordnung mit einer Zentriervorrichtung und einer Sensoröffnung an der Seitenwand des Körpers; und
- Insbesondere, Anordnen eines Griffelements mit einer Befestigungsvorrichtung und einer Griffelementsensoröffnung an der Zentriervorrichtung des Körpers, wobei das Griffelement mit der Befestigungsvorrichtung so an der Zentriervorrichtung angebracht und zentriert wird, dass die Griffelementsensoröffnung passgenau an der Sensoröffnung angeordnet ist;
- Insbesondere, Verbinden der Befestigungsvorrichtung mit der Verbindungsanordnung, wobei die Befestigungsvorrichtung bevorzugt durch Schweissen, Nieten, Pressschweissen, Kleben und/oder Schrauben mit der Verbindungsanordnung verbunden wird;
- Insbesondere, Einführen einer Sensoreinheit umfassend einen Sensor, einen elektrischen Leiter sowie eine Kommunikationseinrichtung, in den Sensorkanal, wobei der Sensor und der elektrische Leiter zumindest teilweise zunächst in den Griffelementsensorkanal und anschliessend in den Körpersensorkanal eingeführt werden und bevorzugt der Körpersensorkanal und/oder das Griffelementsensorkanal vorgängig mit einem Gleitmittel, insbesondere Silikonspray oder Silikonöl, beaufschlagt werden;
- Insbesondere, Anordnen der Kommunikationseinrichtung im Griffelement und/oder am Griffelement.
